(19) Europäisches Patentamt

European Patent Office

Office européen des brevets

(11) Veröffentlichungsnummer: **0 217 215**
**A2**

(12) **EUROPÄISCHE PATENTANMELDUNG**

(21) Anmeldenummer: 86112727.2

(22) Anmeldetag: 15.09.86

(51) Int. Cl.⁴ **B01D 53/34** , B01D 53/18 , F23J 15/00

(30) Priorität: 02.10.85 AT 2848/85

(43) Veröffentlichungstag der Anmeldung:
08.04.87 Patentblatt 87/15

(84) Benannte Vertragsstaaten:
BE CH DE FR GB IT LI NL SE

(71) Anmelder: EICHHORN, Karl
Anton Baumgartnerstrasse 44/A1/092
A-1232 Wien(AT)

(72) Erfinder: EICHHORN, Karl
Anton Baumgartnerstrasse 44/A1/092
A-1232 Wien(AT)

(74) Vertreter: Kliment, Peter, Dipl.-Ing. Mag.-Jur.
Singerstrasse 8
A-1010 Wien(AT)

(54) **Einrichtung zum Reinigen von Abgasen.**

�估 Einrichtung zum Reinigen von Abgasen insbesondere einer Feuerungsanlage, mit mindestens einer Führung für die Abgase und mindestens einer mit einer Waschflüssigkeitsquelle verbundenen, in die Führung für die Abgase hineinragenden Sprühdüse, sowie einem Abfluß die Waschflüssigkeit und einem Abzug für die gereinigten Abgase. Um trotz einer einfachen Kontruktion einen hohen Reinigungseffekt zu erzielen ist vorgesehen, die Abgase durch gut wärmeleitende Abgasführungsrohre (2) nach Umkehr der Strömungsrichtung durch weitere Rohre (11) zu leiten, in den Düsen quer zu deren Längrichtung angeordnet sind und die aus diesen Rohren austretenden gereinigten Gase über die Abgasführungsrohre (2) hinweg zum Abzug (7) zu leiten.

Fig.1

EP 0 217 215 A2

## Einrichtung zum Reinigen von Abgasen, insbesondere von Feuerungsanlagen

Die Erfindung bezieht sich auf eine Einrichtung zum Reinigen von Abgasen, insbesondere einer Feuerungsanlage, mit mindestens einer Führung für die Abgase und mindestens einer mit einer Waschflüssigkeitsquelle verbunden, in die Führung für die Abgase hereinragenden Sprühdüse, sowie mit einem Abfluß für die Waschflüssigkeit und einem Abzug für die gereinigten Abgase.

Eine derartige Einrichtung wurde beispielsweise durch die DE-OS 32 35 341 bekannt. Bei dieser bekannten Einrichtung gelangt das zu reinigende Gas tangential in den unteren Bereich eines senkrecht stehenden Reaktionsbehälters, wodurch aufgrund der Fliehkraft ein Teil der Feststoffe abgeschieden werden. In das über ein Tauchrohr aufsteigende Gas wird mittels nach oben gerichteter Düsen ein Reaktionsmittel-Dampfgemisch und über weitere Düsen Wasser eingebracht. Das so behandelte Gas wird anschließend einem Staubabscheider zugeführt.

Der Nachteil dieser Lösung liegt im komplizierten Aufbau der Anlage und den durch die Dampfeinbringung verursachten relativ hohen Betriebskosten. Ziel der Erfindung ist es, eine Einrichtung der eingangs erwähnten Art vorzuschlagen, die sich durch einen einfachen Aufbau und einen einfachen Betrieb auszeichnet.

Erfindungsgemäß wird dies dadurch erreicht, daß die Führung für die Abgase durch zwischen zwei Wänden im wesentlichen horizontal verlaufende und diese durchsetzende Abgasführungsrohre aus gut wärmeleitendem Material gebildet ist, wobei die eine Wand einen Sammelraum für die ankommenden Gase und die andere Wand einen Umlenkraum begrenzen, welche zweite Wand von weiteren unterhalb der Abgasführungsrohre angeordneten in den Umlenkraum ragenden Rohren durchsetzt ist, in denen quer zu deren Längsrichtung ausgerichtete und mit einer Waschflüssigkeitsquelle verbundene Sprühdrüsen eingesetzt sind und die oberhalb des Abflusses für die mit Feststoffen versetzte Waschflüssigkeit enden. Auf diese Weise ergibt sich ein sehr einfacher Aufbau, wobei das mit der Waschflüssigkeit, z.B. Wasser, behandelte Gas vor dem Entweichen über den Abzug über die von den noch unbehandelten heißen Abgasen durchströmten Abgasführungsrohre hinwegstreicht und dadurch aufgeheizt wird. Damit wird verhindert, daß die Temperatur der abziehenden gereinigten Gase unter deren Taupunkt fällt. Durch die Behandlung der Abgase mit einer Waschflüssigkeit, werden nicht nur die darin enthaltenen Feststoffe gebunden und sehr weitgehend abgeschieden, sondern es kann, bei entsprechender Wahl der Waschflüssigkeit, auch zu einer Reaktion der Waschflüssigkeit mit in dem Abgas enthaltenen Verbindungen, wie z.B. SO2 kommen, wodurch der Ausstoß dieser, für die Umwelt schädlichen Verbindungen vermindert werden kann. So kann als Waschflüssigkeit z.B. Wasser verwendet werden, daß z.B. mit SO2 relativ leicht reagiert. Dabei kann die sich dabei ergebende Verbindung durch Behandlung mit Kalk in eine ungefährliche Verbindung übergeführt werden.

Nach einem weiteren Merkmal der Erfindung kann vorgesehen sein, daß die Enden der mit den Sprühdüsen bestückten Rohren in horizontaler Richtung gegenüber dem oberhalb der Abgasführungsrohre angeordneten Abzug für die gereinigten Abgase versetzt sind. Auf diese Weise wird auf einfache Weise die Wegstrecke, in der das gereinigte Gas in Kontakt mit den heißen Abgasführungsrohre kommt, verlängert, wodurch eine weitgehende Aufheizung der gereinigten Gase erreicht wird.

Bei einer bevorzugten Ausführungsform der Erfindung kann vorgesehen sein, daß in den mit den Sprühdüsen bestückten Rohren zwischen den einzelnen, in axialer Richtung der Rohre distanzierten Sprühdüsen nach unten gerichtete Auslaßöffnungen vorgesehen sind, wobei vorzugsweise in Strömungsrichtung der Abgase gesehen, unmittelbar hinter jeder Auslaßöffnung ein an der Innenwand des Rohres anliegender Ring angeordnet ist, der gegebenenfalls nach oben zu gegen die Strömungsrichtung der Abgase geneigt eingesetzt ist.

Auf diese Weise wird ein rascher Abfluß der Waschflüssigkeit nach deren Kontakt mit den zu reinigenden Abgasen sicherge stellt, wobei die Ringe die Abscheidung der mitgerissenen Flüssigkeitströpfchen erleichtern. Dadurch werden die Feststoffe aus dem Abgas weitgehend abgeschieden, ohne daß aber das Gas selbst viel Feuchtigkeit aufnimmt, wodurch die Aufheizung des gereinigten Abgases beim Überstreichen der von den noch ungereinigten Abgasen durchströmten Abgasführungsrohren wesentlich erleichert wird.

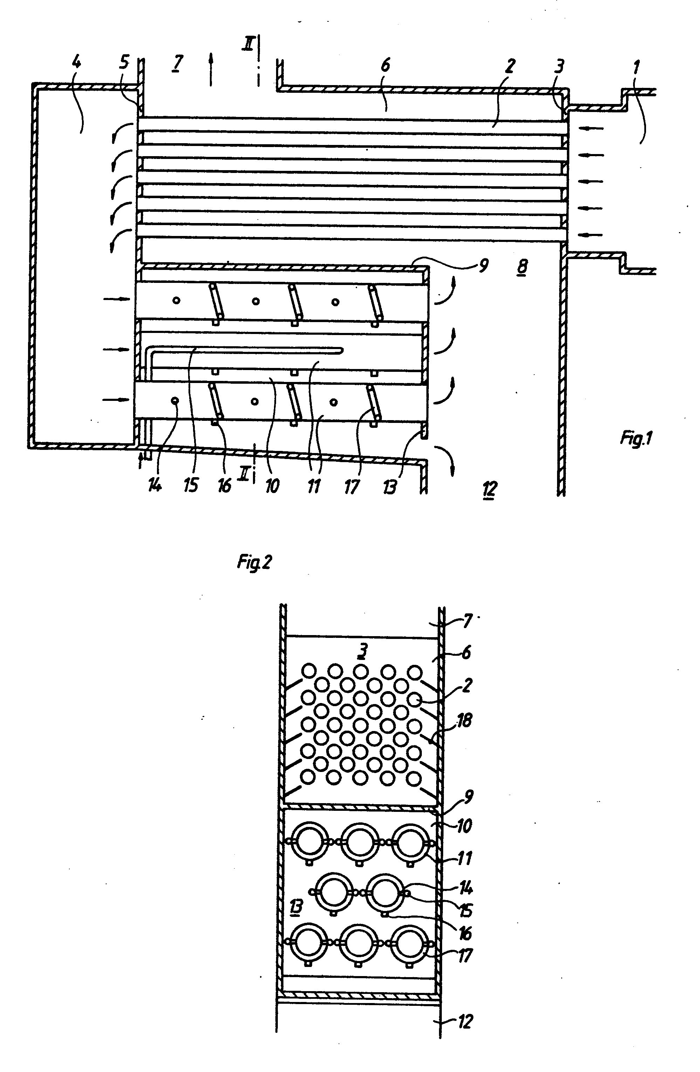

Die Erfindung wird nun an Hand der Zeichnung näher erläutert. Dabei zeigt Fig. 1 schematisch einen Längsschnitt und Fig. 2 einen Querschnitt entlang der Linie II -II in Fig. 1 durch eine erfindungsgemäße Einrichtung.

Die zu reinigenden Abgase strömen von dem im Anschluß an den nicht dargestellten Brennraum angeordneten Sammelraum 1 durch die horizontal verlaufenden Abgasführungsrohre 2. Diese Abgasführungsrohre 2 durchsetzen die den Sammelraum begrenzende Wand 3 und die einen Umlenkraum 4 abgrenzende Wand 5 und durchlaufen einen Aufheizraum 6, der mit einem Abzug 7 für die gereinigten Abgase versehen ist. Dieser Aufheizraum 6 ist nach unten zu bis auf eine Eintrittsöffnung 8 für die behandelten Abgase durch eine Wand 9 abgeschlossen.

Unterhalb des Aufheizraumes 6 befindet sich der Behandlungsraum 10, der ebenfalls von Rohren 11 durchsetzt ist, die leicht gegen einen Abfluß 12 zu abfallend angeordnet sind. Diese Rohre 11 durchsetzen die Wand 5 des Umlenkraumes 4 und eine den Behandlungsraum begrenzende Wand 13, die allerdings nicht bis zum Boden des Behandlungsraumes 10 reicht, um den Abfluß der mit den aus den Abgasen niedergeschlagenen Feststoffen versetzten Waschflüssigkeit zum Abfluß 12 hin zu ermöglichen. In diese Rohre 11 sind Düsen 14 eingesetzt, die die Waschflüssigkeit fein verteilt in das Innere der Rohre 11 versprüchen. Die Zufuhr der Waschflüssigkeit zu den einzelnen Düsen 14 erfolgt, wie aus Fig. 2 ersichtlich ist, über Sammelleitungen 15.

Zwischen den in axialer Richtung der Rohre 11 voneinander beabstandeten Düsen 14 sind nach unten gerichtete Abflußöffnungen 16 in den Rohren 11 angeordnet, durch die hindurch die mit den niedergeschlagenen Feststoffen versetzte Waschflüssigkeit abfließen kann. Der Boden des Behandlungsraumes 10 fällt gegen den Abfluß 12 zu leicht geneigt ab, um das Abfließen der Waschflüssigkeit zu gewährleisten.

Um das Abfließen der Waschflüssigkeit durch die Öffnungen 16 zu erleichert und auch das Abscheiden der Flüssigkeitströpfchen zu beschleunigen, sind, in Strömungs-richtung der Abgase gesehen, hinter jeder Öffnung 16 Ringe 17 in die Rohre 11 eingesetzt, wobei diese Ringe 17 nach oben zu gegen die Strömungsrichtung der Abgase geneigt, in das Innere der Rohre 11 eingesetzt sind.

Die aus den Rohren 11 austretenden, behandelten Gase haben sich aufgrund des Einsprühens einer Waschflüssigkeit, wie z.B. Wasser, abgekühlt. Um bei der Abführung dieser behandelten Gase eine Unterschreitung des Taupunktes während des Durchströmens des Abzugs 7 zu vermeiden, werden die Gase durch den Aufheizraum 6 geleitet, wo sie über die Abgasführungsrohre 2 hinwegstreichen, die aus einem gut wärmeleitenden Material wie z.B. Matalle hergestellt sind und deren Temperatur an der Außenseite im wesentlichen der Temperatur der noch unbehandelten Abgase entspricht. Aufgrund der horizontalen Versetzung des Endes des Behandlungsraumes 10 und des Abzuges 7 ist sichergestellt, daß die behandelten bzw. gereinigten Gase über die heißen Abgasführungsrohre 2 hinwegstreichen, bevor sie zum Abzug 7 gelangen.

Zur besseren Führung der gereinigten Gase im Aufheizraum 6 können in diesem, wie aus Fig. 2 ersichtlich, Leitbleche 18 angeordnet sein.

## Ansprüche

1. Einrichtung zum Reinigen von Abgasen insbesondere einer Feuerungsanlage, mit mindestens einer Führung für die Abgase und mindestens einer mit einer Waschflüssigkeitsquelle verbundenen, in die Führung für die Abgase hineinragenden Sprühdüse, sowie einem Abfluß für die Waschflüssigkeit und einem Abzug für die gereinigten Abgase, dadurch gekennzeichnet,

daß die Führung für die Abgase durch zwischen zwei Wänden (3,5) im wesentlichen horizontal verlaufenden und diese durchsetzende Abgasführungsrohre (2) aus gut wärmeleitendem Material gebildet ist, wobei die eine Wand (3) einen Sammelraum für die ankommenden Gase und die andere Wand (5) einen Umlenkraum (4) begrenzen, welche zweite Wand (5) von weiteren unterhalb der Abgasführungsrohre (2) angeordneten, in den Umlenkraum ragenden Rohren (11) durchsetzt ist, in denen die quer zu deren Längsrichtung ausgerichteten und mit der Waschflüssigkeitsquelle verbundenen Sprühdüsen (14) eingesetzt sind und die oberhalb des Abflusses (12) für die mit Feststoffen versetzte Waschflüssigkeit enden.

2. Einrichtung nach Anspruch 1,

dadurch gekennzeichnet,

daß die Enden der mit den Sprühdüsen (14) bestückten Rohre (11) in horizontaler Richtung gegenüber dem oberhalb der Abgasführungsrohre - (2) angeordneten Abzug (7) für die gereinigten Abgase versetzt sind.

3. Einrichtung nach Anspruch 1 oder 2,

dadurch gekennzeichnet,

daß in den mit den Sprühdüsen (14) bestückten Rohren (11) zwischen den einzelnen in axialer Richtung der Rohre (11) distanzierten Sprühdüsen (14) nach unten gerichtete Auslaßöffnungen (16) vorgesehen sind, wobei vorzugsweise, in Strömungsrichtung der Abgase gesehen, unmittelbar hinter jeder Auslaßöffnung (16) ein an die Innenwand des Rohres (11) anliegender Ring (17) angeordnet ist, der gegebenenfalls nach oben zu gegen die Strömungsrichtung der Abgase geneigt eingesetzt ist.

Fig.1

Fig.2